# EUROPÄISCHE PATENTSCHRIFT

(11) **EP 3 774 064 B1**
(45) Veröffentlichungstag und Bekanntmachung des Hinweises auf die Patenterteilung: **24.01.2024**
(21) Anmeldenummer: 19716376.9
(22) Anmeldetag: 04.04.2019
(51) Int. Cl.: B04B 9/12

(54) **VERFAHREN, MIT DEM EIN SCHMIERMITTELDURCHFLUSS AN EINER ZENTRIFUGE ÜBERWACHT WIRD**
METHOD BY WHICH A LUBRICANT THROUGHFLOW AT A CENTRIFUGE IS MONITORED
PROCÉDÉ SERVANT À SURVEILLER UN DÉBIT DE LUBRIFIANT POUR UNE CENTRIFUGEUSE

(30) Priorität: 10.04.2018 DE 102018108471
(43) Veröffentlichungstag der Anmeldung: 17.02.2021
(73) Patentinhaber: GEA Mechanical Equipment GmbH, 59302 Oelde (DE)
(72) Erfinder: BATHELT, Thomas, 59302 Oelde (DE); MACKEL, Wilfried, 59510 Lippetal-Herzfeld (DE)
(74) Vertreter: Specht, Peter
(86) Internationale Anmeldenummer: PCT/EP2019/058533
(87) Internationale Veröffentlichungsnummer: WO 2019/197272

(56) Entgegenhaltungen:
- CN-A- 101 327 469
- CN-Y- 201 423 315
- DE-A1-102013 100 180
- JP-A- S6 198 925

## Beschreibung

Die vorliegende Erfindung betrifft ein Verfahren, mit dem ein Schmiermitteldurchfluss an einer Zentrifuge überwacht wird, nach dem Oberbegriff des Anspruchs 1.

Zentrifugen weisen eine Antriebsvorrichtung mit einem Motor auf, um mit diesem zumindest die Trommel zu drehen. Dieser Motor ist in der Regel ein Elektromotor oder aber - seltener - ein fluidisch betriebener Motor. Der Motor dreht direkt oder über zwischengeschaltete weitere Elemente wie ein Getriebe und/oder einen Riemen eine Antriebsspindel, die mit einem oder mehreren Lagern in einem Gehäuse und/oder Gestell gelagert ist. Die Antriebsspindel ist wiederum drehfest mit der Trommel der Zentrifuge gekoppelt
Wird ein Direktantrieb realisiert - siehe z.B. die DE 10 2013 100 180 A1 -, wird das Antriebsmoment des Elektromotors direkt und u.U. sogar ohne Kupplung in die Antriebsspindel der Zentrifuge eingeleitet. Es kann dann sogar die Läuferwelle des Elektromotors aus dem Elektromotor herausgeführt und selbst als Antriebsspindel drehfest mit der Trommel der Zentrifuge verbunden sein.

Die Antriebsspindel der Zentrifuge ist in einer Lageranordnung drehbar gelagert, die eines oder mehrere Lager aufweist. Die Lageranordnung wird bei vielen Konstruktionen kontinuierlich durch eine Schmiermittelversorgung in einem kontinuierlichen Schmiermittelstrom mit Schmiermittel versorgt, wobei die Schmiermittelversorgung nach dem Prinzip einer Umlaufschmierung gestaltet sein kann. Der Schmiermittelumlauf wird durch eine oder mehrere Pumpen erzeugt. Der Begriff "Schmiermittel" ist breit zu verstehen und umfasst fliessfähige Schmierstoffe verschiedenster Art, insbesondere Schmieröle.

Insoweit ist die Erfindung zumindest bei den gesamten vorstehend beschriebenen Varianten von Zentrifugen nutzbar.

Für einen reibungslosen Betrieb der Zentrifuge ist eine zuverlässige Versorgung der Lageranordnung mit Schmiermittel sicherzustellen. Insofern ist es hinsichtlich einer möglichst hohen Verfügbarkeit der Zentrifuge wünschenswert, wenn der Schmiermittelstrom kontinuierlich überwacht und wenigstens ein Messwert eines Betriebszustandes regelmäßig mit wenigstens einem Grenzwert verglichen wird, so dass er anzeigbar ist und/ oder auf Grund von Abweichungen von diesen Grenzwerten eine Warnung ausgegeben und/oder eine Aktion gestartet werden kann.

Es ist daher wünschenswert in den Schmiermittelkreislauf innerhalb eines Zentrifugenantriebs mit Schmiermittelumlaufschmierung Sensoren/Messgeräte zur direkten oder indirekten Durchflussmessung einzubauen.

Die Verwendung von induktiven Durchflussmessern erscheint weniger sinnvoll, da die Verwendung dieses Messprinzip wegen der elektrischen Eigenschaften vieler Schmiermittel ungeeignet ist. Ein Massedurchflussmesser ist vom Messprinzip zwar geeignet, aber die zirkulierende Schmiermittelmenge ist häufig für einen sinnvollen Einsatz der zumal recht teuren Messgeräte zu gering.

Ein Ringkolbenzähler erzeugt einen geringen Gegendruck. Da die Messung auf der Schmiermittelrücklaufseite der Lagerung erfolgt, steht dieser Schmiermitteldruck bei üblichen Zentrifugenlagerungen in der Regel nicht zur Verfügung. Der Schmiermitteldruck auf der Schmiermittelvorlaufseite der Lagerung kann genutzt und gemessen werden, allerdings kann hiermit eine mögliche Verstopfung im Schmiermittelkreislauf nicht erkannt werden.

Aus diesem Grund sind andere Methoden entwickelt worden, um den Schmiermitteldurchfluss zuverlässig zu messen.

Bei einer bekannten Methode einer solchen Messung des Schmiermitteldurchflusses im Schmiermittelrücklauf wird der Durchfluss mittels des Gewichts des Schmiermittels ermittelt, welches über eine Wippe fließt, wobei die Lage der Wippe berührungslos erfasst und ausgewertet wird.

Bei einer anderen bekannten Methode einer solchen Messung des Schmiermitteldurchflusses wird der Schmiermittelstand in einem Pufferbehälter im Schmiermittelrücklauf mittels einer optischen Messung (z.B. Lichtbrechung oder Trübung) gemessen, wobei der Pufferbehälter mit einem Ablauf versehen ist und somit leerläuft, wenn der Schmiermitteldurchfluss gestört ist.

Einen gattungsgemäßes Verfahren des Standes der Technik zeigt die CN 201 423 315 Y. Zum Stand der Technik wird zudem die CN 101 327 469 A genannt.

Ausgehend von diesem Stand der Technik ist es demnach die Aufgabe der Erfindung, ein verbessertes Verfahren, mit dem ein Schmiermitteldurchfluss an einer Zentrifuge überwacht wird, insbesondere eines Separators oder Dekanters, anzugeben.

Die Erfindung löst diese Aufgabe mit dem Gegenstand des Anspruchs 1.

Anhand dieser wenigstens einen Temperaturmessung und -überwachung wird eine einfache sowie kostengünstige und dennoch sehr zuverlässige Überwachung des Schmiermitteldurchflusses durch die Lageranordnung möglich.

Eine Messstelle im Sinne des Anspruchs 1 ist eine Stelle der Schmiermittelversorgung, insbesondere an oder in einer Leitung, an welcher ein Temperatursensor angeordnet ist, dessen Signal direkt am Sensor oder an einem anderen Ort von einer Auswertungseinrichtung ausgewertet wird. Diese Auswertungseinrichtung kann beispielsweise ein Steuerungsrechner der Zentrifuge sein.

Das Überwachen umfasst dabei einen Vergleich der gemessenen Temperatur oder einer davon abhängigen Größe mit wenigstens einer vorgegebenen Bedingung und das Auslösen einer Aktion bei einem Abweichen von der Bedingung. Die Aktion kann beispielsweise das Ausgeben eines Warnsignales umfassen und/oder einen Notbetrieb oder ein Abschalten der Zentrifuge.

Nach dem Kennzeichen des Anspruchs 1 wird an einer ersten Messstelle und an einer zweiten Messstelle in der Einrichtung zur Schmiermittelversorgung jeweils eine Temperatur des Schmiermittels gemessen und aus den beiden Messwerten jeweils eine Temperaturdifferenz berechnet und die berechnete Temperaturdifferenz mit einer dazu definierten Bedingung - insbesondere einem Grenzwert - verglichen. Daraus ergibt sich eine konstruktiv einfache und zuverlässige Methode zur Überwachung des Schmiermitteldurchflusses durch die Lageranordnung des Zentrifugenantriebs, da Schwankungen der Umgebungstemperatur bzw. Veränderungen der Maschinentemperatur (z.B. auf Grund von einem heiß zu verarbeitenden Produkt) eliminiert werden können.

Vorteilhaft ist auch, wenn ein zeitlicher Verlauf der gemessenen Temperatur des Schmiermittels gebildet wird, so dass ein Temperaturanstieg oder ein Temperaturabfall pro Zeit ermittelbar ist, indem die erste Ableitungsfunktion zum gemessenen Temperaturverlauf über die Zeit ermittelt wird. Dadurch ergibt sich eine weitere konstruktiv einfache und damit vorteilhafte Methode zur Überwachung des Schmiermitteldurchflusses durch die Lageranordnung des Zentrifugenantriebs.

Vorteilhaft ist auch, wenn die Einrichtung zur Schmiermittelversorgung eine Zentripetalpumpe aufweist, an die sich die Schmiermittelrücklaufleitung anschließt. Dabei kann die Einrichtung zur Schmiermittelversorgung vorteilhaft und einfach einen Ringraum aufweisen, in dem sich das Schmiermittel drucklos sammelt. Dadurch kann der Schmiermittelumlauf mit geringem konstruktiven Aufwand realisiert werden, da die ohnehin vorhandene Drehbewegung eines Ölreservoirs, welches auf der Antriebspindel mitrotiert zur Pumpenfunktionalität genutzt wird.

Denkbar ist auch eine Schmiermittelversorgung, bei der ein rotierender Greifer das Schmiermittel aus einem ruhenden Reservoir durch eine Bohrung in der Spindel zu dem mindestens einen Lager fördert.

In einer weiteren bevorzugten Ausführungsvariante der Erfindung wird die Temperatur des Schmiermittels an der wenigstens einen Messstelle kontinuierlich oder quasi-kontinuierlich gemessen. Dadurch kann eine Momentantemperatur angezeigt und ausgewertet werden, so dass auch auf Grund von Temperatur-Zeit-Verläufen auf den Zustand des Schmiermittelkreislaufes geschlossen werden kann.

Die als Temperatursensor verwendeten Sensorelemente können auf verschiedenen Wirkprinzipien beruhen. So kann die Temperatur des Schmiermittels an der wenigstens einen Messstelle jeweils einfach, kostengünstig und genügend genau z.B. mit einem oder mehreren veränderbaren elektrischen Widerständen oder mit einem oder mehreren Thermoelementen, die vorzugsweise den Seebeck-Effekt nutzen oder mit einem oder mehreren Thermofühlern mit Schwingquarz gemessen werden.

In einer weiteren bevorzugten Ausführungsvariante der Erfindung liegt die Position der ersten Messstelle an bzw. in der Schmiermittelvorlaufleitung und die Position der zweiten Messstelle liegt an bzw. in der Schmiermittelrücklaufleitung. In einer anderen oder optionalen Ausführungsvariante der Erfindung liegt die Position der ersten Messstelle an bzw. in der Schmiermittelrücklaufleitung und die Position der zweiten Messstelle liegt im Schmiermittelreservoir. Die Position der ersten Messstelle kann aber auch im Schmiermittelreservoir und die Position der zweiten Messstelle am Maschinengestell liegen. Es sind auch Varianten dieser Kombinationen denkbar. Dadurch liegen die Messstellen vorteilhaft an Orten mit einem jeweils klar ausgeprägten und gut messbaren Temperaturniveau, so dass aus einem gemessenen Temperaturunterschied Rückschlüsse auf den momentanen Zustand des Schmiermittelkreislaufes mit hoher Sicherheit und damit vorteilhaft abgeleitet werden können.

Weitere vorteilhafte Ausgestaltungen sind den Unteransprüchen zu entnehmen.

Nachfolgend wird die Erfindung anhand von Ausführungsbeispielen unter Bezug auf die Figur näher beschrieben. Auf diese Ausführungsbeispiele ist die Erfindung aber nicht beschränkt. Es zeigt:
- Figur 1:: eine Vorderansicht eines Separators im Schnitt;
- Figur 2:: ein Ausschnitt der Vorderansicht des Separators aus Fig. 1 im Schnitt;

Im Folgenden wird die Erfindung anhand eines Separators mit vertikaler Drehachse beschrieben. Dies ist eine bevorzugte aber nicht zwingende Ausführung. Die Erfindung ist auch bei Zentrifugen anderer Bauart und auch anderer Ausrichtung der Drehachse im Raum anzuwenden, so bei Vollmantel-Schneckenzentrifugen bzw. Dekantern.

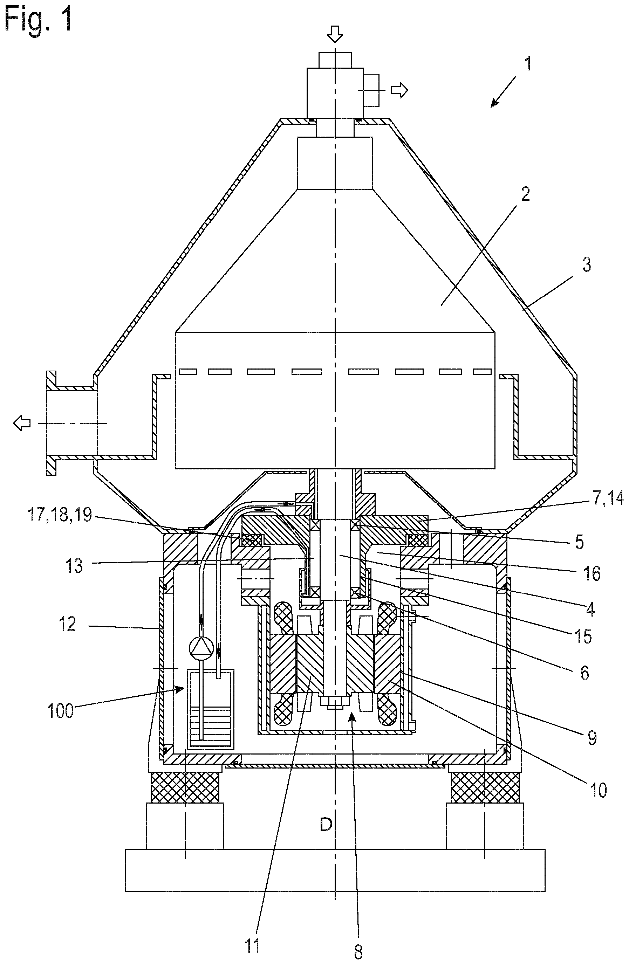

Fig. 1 zeigt einen Separator 1 mit einer Trommel 2 mit hier vertikaler Drehachse D, die von einer Haubenanordnung 3 umgeben ist. Begriffe wie "oben" und "unten" beziehen sich nachfolgend auf die vertikale Anordnung der Trommel 2. Die Trommel 2 ist auf eine Antriebsspindel 4 aufgesetzt. Diese ist mit einer Lageranordnung, die hier ein oberes Lager 5 und ein unteres Lager 6 umfasst, drehbar in einem Lagergehäuse 7 gelagert. Beispielhaft weist diese Lageranordnung zwei Wälzlager auf. Andere Ausgestaltungen sind denkbar (hier nicht dargestellt).

Zum Antrieb der Trommel 2 dient ein Separatorantrieb mit einem (Elektro-)Motor 8 als Antriebsvorrichtung. Dieser Motor 8 weist ein Motorgehäuse 9 mit einem Stator 10 bzw. einer Ständerwicklung und einem Läufer 11 aufweist.

Der Motor 8 weist hier vorteilhaft keine eigene Lagerung auf, was eine kostengünstigere Konstruktion ermöglicht. Die Lageranordnung ist hier zwischen dem Motor 8 und der Trommel 2 angeordnet.

Die Antriebsspindel 4 ist hier beispielhaft ferner direkt - d.h. vorzugsweise ohne zwischengeschaltete Elemente wie z.B. eine Kupplung - mit dem Läufer 11 verbunden. Das Motorgehäuse 9 mit dem Stator 10 ist dagegen starr und ungefedert an dem Maschinengestell 12 des Separators 1 angeordnet bzw. an diesem abgestützt.

Derart bilden die Trommel 2 mit der Antriebsspindel 4, der Läufer 11 und das Lagergehäuse 7 eine schwingende Einheit, die elastisch an dem Maschinengestell 12 abgestützt ist, zu der aber nicht der Stator 10 gehört, so dass zwischen dem Läufer 11 und dem Stator 10 Relativbewegungen auftreten.

Die Antriebsspindel 4 ist mittels des Lagers 5 und des Lagers 6 in einer bohrungsartigen Öffnung 13 des ein- oder mehrteiligen Lagergehäuses 7 angeordnet.

Das Lagergehäuse 7 weist einen oberen Flansch 14 und einen unteren hülsenartigen Abschnitt 15 auf, der eine Öffnung 16 im Maschinengestell 12 durchgreift.

Der obere Flansch 14 stützt sich über umfangsverteilte elastische Dämpferelemente 17 am Maschinengestell 12 ab, die zwischen der Unterseite des Flansches 14 und der Oberseite des Maschinengestells 12 verteilt sind, wobei der Flansch 14 und das Maschinengestell 12 im Bereich der Dämpferelemente 17 mit ringartigen Stufungen 18, 19 versehen ist.

Der Separator 1 weist ferner eine Einrichtung zur Schmiermittelversorgung 100 auf, die die Lageranordnung bzw. hier die Lager 5 und das Lager 6 mit Schmiermittel versorgt. Die Einrichtung zur Schmiermittelversorgung 100 arbeitet hier nach dem Prinzip einer Umlaufschmierung.

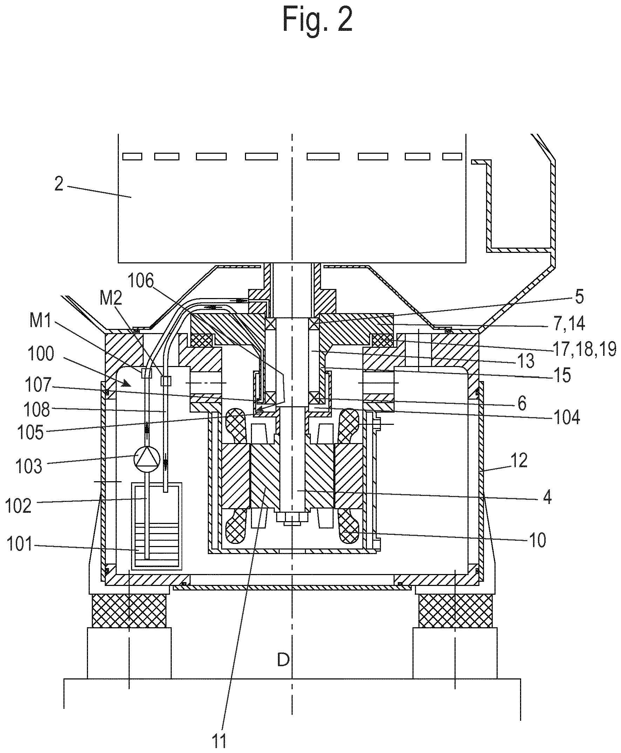

Die Einrichtung zur Schmiermittelversorgung 100 ist in Fig. 2 dargestellt. Die Einrichtung zur Schmiermittelversorgung 100 weist ein Schmiermittelreservoir 101 auf, in der ein Schmiermittelvorrat gespeichert ist. In das Schmiermittelreservoir 101 taucht eine Schmiermittelvorlaufleitung 102 ein. In der Schmiermittelvorlaufleitung 102 ist eine Schmiermittelpumpe 103 angeordnet, die das Schmiermittel durch die Schmiermittelvorlaufleitung 102 zu dem oberen Lager 5 fördert. Das Schmiermittel strömt dann durch das Lager 5 und versorgt dabei das Lager 5 mit Schmierstoff. Nach dem das Schmiermittel das Lager 5 verlassen hat, fließt es durch die bohrungsartige Öffnung 13 des Lagergehäuses 7 zu dem Lager 6. Das Schmiermittel strömt dann durch das Lager 6 und versorgt dabei das Lager 6 mit Schmierstoff.

Das Schmiermittel tritt dann aus einem unten offenen Ende der bohrungsartigen Öffnung 13 am unteren hülsenartigen Abschnitt 15 des Lagergehäuses 7 aus und sammelt sich drucklos in einen gehäuseartigen Ringraum 104 ein. Der gehäuseartige Ringraum 104 wird von einem Gehäuse 105 und dem Lagergehäuse 7 gebildet, wobei das Gehäuse 105 das Lagergehäuse 7 an seinem unteren hülsenartigen Abschnitt 15 umschließt. Infolge der Rotation der Antriebsspindel 4 sammelt sich das Schmiermittel im Betrieb des Separators 1 an der Außenseite 106 des gehäuseartigen Ringraums 104,

In diesen gehäuseartigen Ringraum 104 ragt ein sich radial vom unteren hülsenartigen Abschnitt 15 des Lagergehäuses 7 nach außen in den Ringraum 104 erstreckender, rohrartiger Ansatz bzw. Vorsprung 107 hinein, der nach Art einer nicht mitrotierenden Schälscheibe in eine Schmiermittelrücklaufleitung 108 für das Schmiermittel übergeht, welcher sich zunächst radial nach innen und dann in dem Lagergehäuse 7 nach oben erstreckt und aus diesem nach außen austritt und in das Schmiermittelreservoir 101 einmündet.

Mittels des schälscheibenartigen Ansatzes 107 mit der nachgeordneten Schmiermittelrücklaufleitung 108 ist es bei Drehungen der Trommel 2 bzw. des Ringraumes 104 möglich, pumpenartig das Schmiermittel unter Druck aus dem Ringraum 104 abzuleiten und dieses wieder in den Schmiermittelreservoir 101 zurückzuleiten, ohne das Nebel oder Spritzer entstehen. Derart wird eine Zentripetalpumpe gebildet, an die sich die Schmiermittelrücklaufleitung 108 anschließt.

Innerhalb des Separatorantriebs mit einer derartigen Einrichtung zur Schmiermittelversorgung 100, die nach dem Prinzip der beschriebenen Schmiermittelumlaufschmierung arbeitet, wird ein Teil der anfallenden Abwärme der Lageranordnung, welche durch Lagerreibung hier in dem oberen Lager 5 und dem unteren Lager 6 entsteht, an das Schmiermittel abgegeben.

Dies führt zu einer Erwärmung des Schmiermittels. Diese Erwärmung ist an der bzw. in der Schmiermittelrücklaufleitung 108 messbar. Findet kein Schmiermittelumlauf mehr statt (z.B. wegen einer Verstopfung, einer Leckage oder dem Ausfall der Schmiermittelpumpe 103) oder ist der Schmiermittelumlauf reduziert (Teilverstopfung), verändert sich der Wert der Erwärmung des Schmiermittels in der Schmiermittelrücklaufleitung 108.

Bei einer Verstopfung oder Unterbrechung des Schmiermitteldurchflusses reduziert sich die Erwärmung in der Schmiermittelrücklaufleitung 108 ausgehend von einer vorher erreichten Betriebstemperatur, da die Verlustleistung aus dem Lager nicht mehr von dem Schmiermittelfluss aufgenommen werden kann. Bei einer Teilverstopfung und einem reduzierten Volumenstrom in der Schmiermittelrücklaufleitung 108 des Schmiermittelkreislaufes wird sich die Schmiermitteltemperatur erhöhen, da die reduzierte Ölmenge die gesamte Verlustleistung aus dem Lager aufnehmen muss. Die Abweichung der Schmiermitteltemperatur in der Schmiermittelrücklaufleitung 108 von einem definierten Normalzustand kann somit zur Überwachung des Volumenstromes und damit der Schmiermitteldurchflussmenge verwendet werden.

Es wird nunmehr vorgeschlagen, die Schmiermitteltemperatur im Schmiermittelkreislauf zu messen und je nach gemessener Temperatur auf den aktuellen Zustand des Schmiermitteldurchfluss zu schließen.

Die Temperatur kann an einer einzigen Messstelle M1 im Schmiermittelkreislauf gemessen werden. Die Messung kann kontinuierlich oder quasikontinuierlich in kleinen Intervallen erfolgen.

Durch eine Auswertung er Ergebnisse einer solchen kontinuierlichen oder quasikontinuierlichen Temperaturmessung an dieser wenigstens einen Messstelle M1 ist es möglich, mit Hilfe einer Steuerungseinrichtung und einem geeigneten Überwachungs-Computerprogramm Rückschlüsse auf den Zustand der Schmiermittelversorgung zu ziehen.

So kann direkt die Temperatur ermittelt werden und direkt oder indirekt als Indikator für den Zustand der Schmiermittelversorgung verwendet werden.

So kann beispielsweise auch der Temperaturverlauf über die Zeit ermittelt werden und aus der ersten Ableitung dieser Funktion über die Zeit eine Zustandsinformation über den Trend des Temperaturverlaufes gewonnen werden, was eine Vorhersage der Temperaturentwicklung ermöglicht. Auch kann mindesten eine Eigenschaft dieser Ableitungsfunktion (z.B. Steigung) mit einem definierten Grenzwert verglichen werden, um abhängig hiervon eine Aktion auszulösen.

Die Temperatur im Schmiermittelkreislauf kann alternativ auch an mehreren, insbesondere zwei, unterschiedlichen (jeweils geeigneten) Messstellen M1, M2 im Schmiermittelkreislauf gemessen und es kann dann beispielsweise die Differenztemperatur ΔT zwischen den an den beiden Messstellen M1, M2 jeweils gemessenen Temperaturen als Zustandskriterium bzw. Überwachungskriterium für einen ordnungsgemäßen Schmiermitteldurchfluss im Schmiermittelkreislauf verwendet werden. Mit dieser Methode werden Schwankungen der Umgebungstemperatur bzw. Veränderungen der Maschinentemperatur (z.B. auf Grund von einem heiß zu verarbeitenden Produkt) eliminiert werden, was zu einem deutlich stabileren Betriebsverhalten des Überwachungssystems führt.

Eine bevorzugte geeignete Position für die erste Messstelle M1 liegt beispielsweise an bzw. in der Schmiermittelvorlaufleitung 102. Eine bevorzugte geeignete Position für die zweite Messstelle M2 liegt an bzw. in der Schmiermittelrücklaufleitung 108 (siehe Fig. 2). Weitere geeignete Positionen der Messstellen M1, M2 sind die Schmiermittelrücklaufleitung 108 (M1) und das Schmiermittelreservoir 101 (M2) oder das Schmiermittelreservoir 101 (M1) und das Maschinengestell 12 (M2).

Das folgende Beispiel erläutert diese Zusammenhänge näher:
Bei einem Volumenstrom bzw. einer Schmiermittelumlaufmenge (mit einem Öl als Schmiermittel) von 1 l/min und einer infolge von Reibung abgegebener Wärmeleistung der Lageranordnung der Antriebsspindel 4 von 400 W, ergibt sich damit eine Erwärmung ΔT von 15°C zwischen der Messstelle M1 an bzw. in der Schmiermittelvorlaufleitung 102 und der Messstelle M2 an bzw. in der Schmiermittelrücklaufleitung 108. Diese Erwärmung wird somit als "Normalwert" in der Steuerung der Zentrifuge abgespeichert.

Eine sicher zu überwachende definierte Abweichung von diesem Normalwert könnte somit bei T_{Abweichung} >= 5°C liegen. Dies bedeutet, dass bei einer Abweichung von mehr als 5°C von einem vorher als Normalwert zwischen den Messstellen M1 und M2 ermittelten Temperaturdifferenz auf eine Störung im Schmiermittelkreislauf geschlossen werden muss und deshalb ein entsprechende Warnmeldung oder eine Aktion ausgelöst wird.

Die Temperaturmessung erfolgt vorteilhaft in kontinuierlicher oder quasi-kontinuierlicher Weise durch handelsüblich erhältliche Temperatursensoren bzw. Messprinzipien.

Hinsichtlich der bevorzugten Messprinzipien können z.B. veränderbare elektrische Widerstände (z.B. Platin-Messwiderstände wie Pt100 oder Silizium-Messwiderstände) eingesetzt werden. Denkbar ist auch der Einsatz von Thermoelementen, die den Seebeck-Effekt nutzen. Ebenfalls denkbar ist der Einsatz eines Thermofühlers mit Schwingquarz.

Das Signal dieser Temperatursensoren wird z.B. durch eine elektrische Steuerung (hier nicht dargestellt) erfasst und ausgewertet und kann kontinuierlich angezeigt werden.

Wie beschrieben, kann der zeitliche Verlauf der Temperatur des Schmiermittels im Schmiermittelkreislauf an einer Messstelle M1 oder die Temperaturdifferenz ΔT des der Lageranordnung zufließenden Schmiermittels und das von der Lageranordnung zurückfließenden Schmiermittels aus den jeweiligen Messwerten, die an der Messstelle M1 bzw. M2 ermittelt werden, errechnet werden, um das Ergebnis dann mit einem definierten Schwell- oder Grenzwert zu vergleichen.

Außerdem kann die Steuerung dazu genutzt werden, beim Anlauf der Zentrifuge, bzw. des Separators 1, wenn sich also noch kein auswertbarer zeitlicher Temperaturverlauf vorliegt bzw. sich keine stabile Temperaturdifferenz ΔT zwischen zufließendem und zurückfließendem Schmiermittel eingestellt hat, einen Vergleich mit dem definierten Grenzwert zu unterdrücken.

Diese Unterdrückung kann sowohl die Anlaufzeit der Zentrifuge bzw. des Separators 1 berücksichtigen, als auch die Auslaufzeit. Außerdem kann eine solche Steuerung den zu überwachenden, definierten Grenzwert an die aktuellen Betriebsbedingungen der Zentrifuge anpassen. Wird z.B. die Drehzahl der Zentrifuge bzw. des Separators 1 auf Grund von verfahrenstechnischen Anforderungen abgesenkt, ändert sich auch die Verlustleistung der Lagerung 5, 6, was wiederum einen anderen, definierten Grenzwert erfordert, der überwacht werden muss.

### Bezugszeichen

- 1: Separator
- 2: Trommel
- 3: Haubenanordnung
- 4: Antriebsspindel
- 5: oberes Lager
- 6: unteres Lager
- 7: Lagergehäuse
- 8: Motor
- 9: Motorgehäuse
- 10: Stator
- 11: Läufer
- 12: Maschinengestell
- 13: Öffnung
- 14: Flansch
- 15: Abschnitt
- 16: Öffnung
- 17: Dämpferelement
- 18: Stufung
- 19: Stufung

- 100: Einrichtung zur Schmiermittelversorgung
- 101: Schmiermittelreservoir
- 102: Schmiermittelvorlaufleitung
- 103: Schmiermittelpumpe
- 104: Ringraum
- 105: Gehäuse
- 106: Aussenseite
- 107: Vorsprung
- 108: Mittelrücklaufleitung

- M1: Messstelle
- M2: Messstelle

- D: Drehachse

## Patentansprüche

1. Verfahren, mit dem ein Schmiermitteldurchfluss an einer Zentrifuge überwacht wird, insbesondere eines Separators (1), die eine drehbare Trommel (2) aufweist, die mit einer Antriebsvorrichtung drehbar ist, wobei die Antriebsvorrichtung einen Motor (8) aufweist, der direkt oder indirekt eine Antriebsspindel (4) antreibt, die drehfest mit der Trommel (2) gekoppelt ist, wobei die Antriebsspindel (4) drehbar in einem Lagergehäuse (7) durch wenigstens eine Lageranordnung mit wenigstens einem Lager gelagert ist und wobei die Zentrifuge eine Einrichtung zur Schmiermittelversorgung (100) aufweist, mit der die Lageranordnung mit Schmierstoff versorgt wird, **gekennzeichnet durch** folgende Schritte:
a. Drehen der Antriebsspindel (4) mit dem Motor (8) und gleichzeitiges Betreiben der Schmiermittelversorgung (100) zum Erzeugen eines Schmiermitteldurchflusses durch die Lageranordnung;
b. Überwachen des Schmiermitteldurchflusses durch die Lageranordnung anhand wenigstens einer Messung einer Temperatur des Schmiermittels an wenigstens einer Messstelle (M1, M2) an oder in der Einrichtung zur Schmiermittelversorgung (100),
c. wobei als die jeweilige Messstelle (M1, M2) eine Stelle der Schmiermittelversorgung verwendet wird, an welcher ein Temperatursensor angeordnet ist, und wobei das Ausgangsignal dieses Sensors von einer Auswertungseinrichtung ausgewertet wird, und
d. wobei das Überwachen einen Vergleich der gemessenen Temperatur oder einer davon abhängigen Größe mit wenigstens einer vorgegebenen Bedingung umfasst und wobei bei einem Abweichen von der Bedingung eine Aktion ausgelöst wird,
**dadurch gekennzeichnet, dass**
e. an einer ersten Messstelle (M1) in der Einrichtung zur Schmiermittelversorgung (100) und an einer zweiten Messstelle (M2) jeweils eine Temperatur des Schmiermittels gemessen wird und aus den beiden Messwerten (M1, M2) jeweils eine Temperaturdifferenz ΔT berechnet wird und die berechnete Temperaturdifferenz ΔT mit einer dazu definierten Bedingung als die Bedingung des Schrittes c. verglichen wird.

2. Verfahren nach Anspruch 1, **dadurch gekennzeichnet, dass** ein zeitlicher Verlauf der gemessenen Temperatur des Schmiermittels gemessen wird, und dass die erste Ableitungsfunktion zum gemessenen Temperaturverlauf über die Zeit ermittelt wird und diese mit der definierten Bedingung verglichen wird, um bei einer definierten Abweichung eine Aktion auszulösen.

3. Verfahren nach einem der vorstehenden Ansprüche 1 oder 2, **dadurch gekennzeichnet, dass** die Einrichtung zur Schmiermittelversorgung (100) als Umlaufschmierung ausgelegt ist und betrieben wird.

4. Verfahren nach einem der vorstehenden Ansprüche, **dadurch gekennzeichnet, dass** die Einrichtung zur Schmiermittelversorgung (100) ein Schmiermittelreservoir (101), eine Schmiermittelvorlaufleitung (102) und eine Schmiermittelrücklaufleitung (108) aufweist.

5. Verfahren nach einem der vorstehenden Ansprüche, **dadurch gekennzeichnet, dass** die Einrichtung zur Schmiermittelversorgung (100) eine Schmiermittelpumpe (103) aufweist, die an der Schmiermittelvorlaufleitung (102) angeordnet ist.

6. Verfahren nach einem der vorstehenden Ansprüche, **dadurch gekennzeichnet, dass** die Einrichtung zur Schmiermittelversorgung (100) einen Ringraum (104) aufweist, in dem sich das Schmiermittel drucklos sammelt.

7. Verfahren nach einem der vorstehenden Ansprüche 5 oder 6, **dadurch gekennzeichnet, dass** die Einrichtung zur Schmiermittelversorgung (100) eine Zentripetalpumpe aufweist, an die sich die Schmiermittelrücklaufleitung (108) anschließt.

8. Verfahren nach einem der vorstehenden Ansprüche, **dadurch gekennzeichnet, dass** die Temperatur des Schmiermittels an der wenigstens einen Messstelle (M1, M2) kontinuierlich oder quasi-kontinuierlich gemessen wird.

9. Verfahren nach einem der vorstehenden Ansprüche, **dadurch gekennzeichnet, dass** die Temperatur des Schmiermittels an der wenigstens einen Messstelle (M1, M2) jeweils mit einem oder mehreren veränderbaren elektrischen Widerständen oder mit einem oder mehreren Thermoelementen oder mit einem oder mehreren Thermofühlern mit Schwingquarz gemessen wird.

10. Verfahren nach einem der vorstehenden Ansprüche, **dadurch gekennzeichnet, dass** die Position der ersten Messstelle (M1) an bzw. in der Schmiermittelvorlaufleitung (102) und die Position der zweiten Messstelle (M2) an bzw. in der Schmiermittelrücklaufleitung (108) liegt.

11. Verfahren nach einem der vorstehenden Ansprüche, **dadurch gekennzeichnet, dass** die Position der ersten Messstelle (M1) an bzw. in der Schmiermittelrücklaufleitung (108) und die Position der zweiten Messstelle (M2) im Schmiermittelreservoir (101) liegt.

12. Verfahren nach einem vorstehenden Ansprüche, **dadurch gekennzeichnet, dass** die Position der ersten Messstelle (M1) im Schmiermittelreservoir (101) und die Position der zweiten Messstelle (M2) am Maschinengestell (12) liegt.

13. Verfahren nach einem der vorstehenden Ansprüche, **dadurch gekennzeichnet, dass** die Lageranordnung ein oberes Lager (5) und ein unteres Lager (6) aufweist.

## Claims

1. A method, using which a lubricant flow rate at a centrifuge is monitored, in particular of a separator (1), which has a rotatable drum (2), which is rotatable using a drive device, wherein the drive device has a motor (8), which directly or indirectly drives a drive spindle (4), which is coupled in a rotationally-fixed manner to the drum (2), wherein the drive spindle (4) is rotatably mounted in a bearing housing (7) by at least one bearing arrangement having at least one bearing and wherein the centrifuge has a device for lubricant supply (100), using which the bearing arrangement is supplied with lubricant, **characterized by** the following steps:
a. rotating the drive spindle (4) using the motor (8) and simultaneously operating the lubricant supply (100) to generate a lubricant flow rate through the bearing arrangement;
b. monitoring the lubricant flow rate through the bearing arrangement on the basis of at least one measurement of a temperature of the lubricant at at least one measurement point (M1, M2) on or in the device for lubricant supply (100),
c. wherein a point of the lubricant supply is used as the respective measurement point (M1, M2) at which a temperature sensor is arranged, and wherein the output signal of this sensor is evaluated by an evaluation unit, and
d. wherein the monitoring comprises a comparison of the measured temperature or a variable dependent thereon to at least one predetermined condition, and wherein in the event of a deviation from the condition, an action is triggered, **characterized in that**
e. at a first measurement point (M1) in the device for lubricant supply (100) and at a second measurement point (M2), a temperature of the lubricant is measured in each case and a temperature differential ΔT is calculated in each case from the two measured values (M1, M2) and the calculated temperature differential ΔT is compared to a condition defined as the condition of step c.

2. The method according to claim 1, **characterized in that** a time curve of the measured temperature of the lubricant is measured, and the first derivative function of the measured temperature curve over time is ascertained and compared to the defined condition in order to trigger an action in the event of a defined deviation.

3. The method according to any one of the preceding claims 1 or 2, **characterized in that** the device for lubricant supply (100) is designed and operated as circulating lubrication.

4. The method according to any one of the preceding claims, **characterized in that** the device for lubricant supply (100) has a lubricant reservoir (101), a lubricant feed line (102), and a lubricant return line (108).

5. The method according to any one of the preceding claims, **characterized in that** the device for lubricant supply (100) has a lubricant pump (103), which is arranged on the lubricant feed line (102).

6. The method according to any one of the preceding claims, **characterized in that** the device for lubricant supply (100) has a ring space (104), in which the lubricant collects in unpressurized form.

7. The method according to any one of the preceding claims 5 or 6, **characterized in that** the device for lubricant supply (100) has a centripetal pump, which the lubricant return line (108) adjoins.

8. The method according to any one of the preceding claims, **characterized in that** the temperature of the lubricant is measured continuously or quasi-continuously at the at least one measurement point (M1, M2).

9. The method according to any one of the preceding claims, **characterized in that** the temperature of the lubricant is measured at the at least one measurement point (M1, M2) in each case using one or multiple variable electrical resistors or using one or multiple thermocouples or using one or multiple thermal sensors having quartz oscillator.

10. The method according to any one of the preceding claims, **characterized in that** the position of the first measurement point (M1) is on or in the lubricant feed line (102) and the position of the second measurement point (M2) is on or in the lubricant return line (108).

11. The method according to any one of the preceding claims, **characterized in that** the position of the first measurement point (M1) is on or in the lubricant return line (108) and the position of the second measurement point (M2) is in the lubricant reservoir (101).

12. The method according to any one of the preceding claims, **characterized in that** the position of the first measurement point (M1) is in the lubricant reservoir (101) and the position of the second measurement point (M2) is on the machine frame (12).

13. The method according to any one of the preceding claims, **characterized in that** the bearing arrangement has a top bearing (5) and a bottom bearing (6).

## Revendications

1. Procédé pour la surveillance du débit de lubrifiant sur une centrifugeuse, en particulier un séparateur (1) muni d'un tambour (2) rotatif qui peut être entraîné en rotation par un dispositif d'entraînement, lequel dispositif d'entraînement comporte un moteur (8) qui entraîne directement ou indirectement une broche d'entraînement (4) couplée au tambour de manière solidaire en rotation (2), la broche d'entraînement (4) étant supportée avec possibilité de rotation dans un corps de palier (7) par au moins un dispositif de palier avec au moins un palier et la centrifugeuse comportant une installation pour l'alimentation en lubrifiant (100) avec laquelle le dispositif de palier est alimenté en lubrifiant, **caractérisé en ce qu'**il comprend les étapes suivantes :
a. mise en rotation de la broche d'entraînement (4) avec le moteur (8) et fonctionnement simultané de l'alimentation en lubrifiant (100) pour produire un débit de lubrifiant à travers le dispositif de palier ;
b. surveillance du débit de lubrifiant à travers le dispositif de palier à l'aide d'au moins une mesure d'une température du lubrifiant en au moins un point de mesure (M1, M2) sur ou dans l'installation d'alimentation en lubrifiant (100),
c. chaque point de mesure (M1, M2) étant formé à un endroit de l'alimentation en lubrifiant où une sonde de température est disposée et le signal de sortie de cette sonde étant analysé par une unité d'analyse, et
d. la surveillance comprenant une comparaison de la température mesurée ou d'une grandeur dépendante de celle-ci et d'au moins une condition prédéterminée et une action étant déclenchée en cas de non-respect de la condition,
**caractérisé en ce que**
e. une température du lubrifiant est mesurée en un premier point de mesure (M1) dans l'installation d'alimentation en lubrifiant (100) et en un deuxième point de mesure (M2) et une différence de température ΔT est calculée à partir des deux valeurs de mesure (M1, M2) et la différence de température ΔT est comparée à une condition définie pour cela comme la condition de l'étape c.

2. Procédé selon la revendication 1, **caractérisé en ce que** l'évolution dans le temps de la température mesurée du lubrifiant est mesurée et **en ce que** la première fonction dérivée de l'évolution mesurée de la température dans le temps est déterminée et comparée avec la condition définie, afin de déclencher une action en cas d'écart défini.

3. Procédé selon l'une des revendications 1 ou 2, **caractérisé en ce que** l'installation d'alimentation en lubrifiant (100) est conçue et fonctionne comme une lubrification par circulation.

4. Procédé selon l'une des revendications précédentes, **caractérisé en ce que** l'installation d'alimentation en lubrifiant (100) comporte un réservoir de lubrifiant (101), une conduite d'arrivée de lubrifiant (102) et une conduite de retour de lubrifiant (108).

5. Procédé selon l'une des revendications précédentes, **caractérisé en ce que** l'installation d'alimentation en lubrifiant (100) comporte une pompe à lubrifiant (103) qui est disposée sur la conduite d'arrivée de lubrifiant (102).

6. Procédé selon l'une des revendications précédentes, **caractérisé en ce que** l'installation d'alimentation en lubrifiant (100) présente un espace annulaire (104) dans lequel le lubrifiant est recueilli sans pression.

7. Procédé selon l'une des revendications 5 ou 6, **caractérisé en ce que** l'installation d'alimentation en lubrifiant (100) comporte une pompe centripète à laquelle la conduite de retour de lubrifiant (108) se raccorde.

8. Procédé selon l'une des revendications précédentes, **caractérisé en ce que** la température du lubrifiant à l'au moins un point de mesure (M1, M2) est mesurée de façon continue ou quasi continue.

9. Procédé selon l'une des revendications précédentes, **caractérisé en ce que** la température du lubrifiant à l'au moins un point de mesure (M1, M2) est mesurée avec une ou plusieurs résistances électriques variables ou avec un ou plusieurs thermocouples ou avec une ou plusieurs sondes de température à cristal piézoélectrique.

10. Procédé selon l'une des revendications précédentes, **caractérisé en ce que** la position du premier point de mesure (M1) se trouve sur ou dans la conduite d'arrivée de lubrifiant (102) et la position du deuxième point de mesure (M2) sur ou dans la conduite de retour de lubrifiant (108).

11. Procédé selon l'une des revendications précédentes, **caractérisé en ce que** la position du premier point de mesure (M1) se trouve sur ou dans la conduite de retour de lubrifiant (108) et la position du deuxième point de mesure (M2) dans le réservoir de lubrifiant (101).

12. Procédé selon l'une des revendications précédentes, **caractérisé en ce que** la position du premier point de mesure (M1) se trouve dans le réservoir de lubrifiant (101) et la position du deuxième point de mesure (M2) sur le bâti de la machine (12).

13. Procédé selon l'une des revendications précédentes, **caractérisé en ce que** le dispositif de palier comporte un palier supérieur (5) et un palier inférieur (6).
